(19)

Europäisches
Patentamt

European
Patent Office

Office européen
des brevets

(11)  **EP 3 118 663 A1**

(12)  **EUROPEAN PATENT APPLICATION**

(43) Date of publication:
18.01.2017  Bulletin 2017/03

(21) Application number: 15176795.1

(22) Date of filing: 15.07.2015

(51) Int Cl.:
**G02B 17/00** (2006.01)     **G02B 17/06** (2006.01)
**G02B 17/08** (2006.01)     **G02B 13/26** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Jutersek, Vincenc
1000 Ljubljana (SI)**

(72) Inventor: **Jutersek, Vincenc
1000 Ljubljana (SI)**

(74) Representative: **Kretschmann, Dennis
Boehmert & Boehmert
Anwaltspartnerschaft mbB
Patentanwälte Rechtsanwälte
Pettenkoferstraße 20-22
80336 München (DE)**

(54) **AN OPTICAL COMPONENT FOR AN OPTICAL INSTRUMENT, AND METHODS OF USE FOR ENHANCING AN IMAGE INTENSITY OR SPATIAL RESOLUTION**

(57)     An optical component for an optical instrument is adapted to deflect optical rays passing through the optical component and to image a source object placed on an optical axis on a first side of the optical component into an image object placed on the optical axis on a second side of the optical component, wherein, when a size of the image object coincides with a size of the source object, an absolute value of a steepest slope of incoming optical rays is different from an absolute value of a steepest slope of outgoing optical rays. The optical component may be used in an optical telescope for enhancing an image intensity, or enhancing a spatial resolution.

EP 3 118 663 A1

**Description**

Field of the Invention

The present invention relates to an optical component for an optical instrument, in particular for an optical telescope, and to methods of enhancing an image intensity of said optical instrument or a spatial resolution of said optical instrument by means of said optical component.

Background of the Invention

The quality of optical instruments such as telescopes, for instance their image intensity or spatial resolution crucially depend on the properties of the elementary optical building blocks or components of the optical instrument. These components may comprise lenses, flat and parabolic mirrors, as well as reflectors.

The propagation of light through such an optical system is generally described in terms of the paraxial approximation in geometrical optics. For instance, lenses are generally represented as a thin lens, which has a negligible thickness (compared to the focal length) and is free of all aberrations. Any ray entering parallel to the optical axis on one side of the thin lens proceeds towards the focal point on the other side. Any ray arriving at a thin lens after passing through the focal point on one side comes out parallel to the optical axis on the other side. Moreover, any ray that passes through the center of a thin lens will not change its direction.

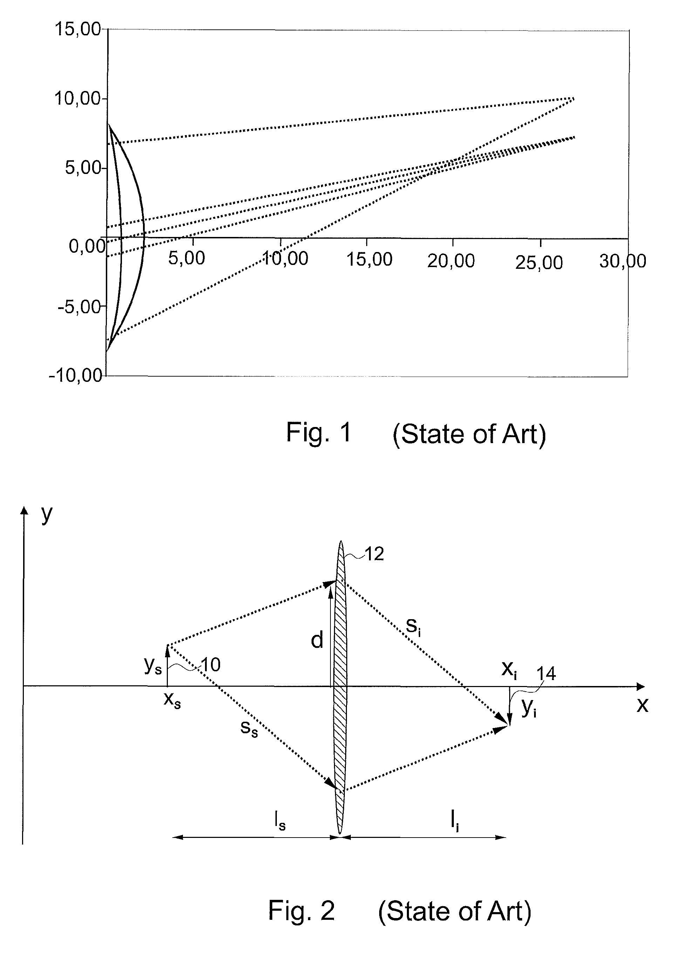

The thin lens is a simplified and idealized representation of an actual lens. Deviations from the properties of the thin lens can be observed in many real optical components in the form of aberrations or distortions. For instance, Fig. 1 is a ray tracing representation of an optical lens with positive coma, in which parallel incident rays are no longer focused into a single focus point. As can be taken from Fig. 1, the rays which enter the lens near the edges converge at the focal point (27, 10), while the rays closer to the optical axis converge at the focal point (27, 7.4). The lens is a spherical lens with the radius of curvature of the first surface (on the left) equal to 40 and the radius of curvature of the second surface (on the right) equal to 17. The index of refraction is variable, $n = 1.7$ near the edges of the lens and $n = 2$ near the center of the lens.

Distortions such as coma may degrade the quality of an optical instrument. However, corrections can be made by means of additional optical components, such as correction lenses which may be inserted into the optical path. For instance, by means of exposing the inner and outer rays to strongly curved refractive surfaces, the positive coma shown in Fig. 1 can be corrected so that all the rays converge at the point where the rays close to the optical axis converge.

In addition to these passive correction techniques, electronic techniques are sometimes employed in optical telescopes to correct aberrations, or to enhance the image intensity or spatial resolution. However, these techniques require a sophisticated control and hence are costly to build and maintain and sometimes prone to malfunctions.

What is needed is an improved optical component to enhance the optical properties of an optical instrument, such as a telescope.

Summary of the Invention

This objective is achieved by means of an optical component according to independent claim 1 as well as by the methods of use of an optical component according to claims 14 and 15. The dependent claims relate to preferred embodiments.

An optical component for an optical instrument according to the present invention is adapted to deflect optical rays passing through said optical component and to image a source object placed on an optical axis on a first side of said optical component into an image object placed on said optical axis on a second side of said optical component, wherein, when a size of said image object coincides with a size of said source object, an absolute value of a steepest slope of incoming optical rays, said incoming optical rays emanating from said source object and propagating into said optical component and towards said image object, is different from an absolute value of a steepest slope of outgoing optical rays, said outgoing optical rays emanating from said optical component towards said image object.

The optical component according to the present invention differs from a thin lens, in which an absolute value of a steepest slope of said incoming rays coincides with an absolute value of a steepest slope of said outgoing optical rays. The inventor found that an optical component according to the present invention may significantly enhance an image intensity or a spatial resolution of an optical instrument, such as an optical telescope of an optical microscope. The present invention achieves this enhancement by means of purely passive optical components, i.e. without electronic enhancement. This does not exclude, though, that electronic components are employed in said optical instrument for other purposes, or to further enhance the optical properties.

The properties of the optical component according to the present invention may be tested by placing an object on an optical axis at a distance from said optical component such that the image of said object has the same size as the object itself. In this configuration, one may determine the steepest slope of optical rays emanating from the source object and propagating towards said optical component and said image object, i.e. the slope of the incoming rays that are only just being imaged. In the same way, one may determine the steepest slope of the optical rays emanating from said optical component towards said image object. These outgoing optical rays correspond to incoming optical rays emanating from said source object, and their slope is such that they only just reach the image object. In an optical component according to the present invention, said absolute value of said steepest slope of said incoming rays is different from said absolute of said steepest slope of said outgoing optical rays.

Said slope of said incoming optical rays and/or said slope of said outgoing optical rays may be slopes measured with respect to said optical axis.

In an embodiment, said absolute value of said steepest slope of said incoming optical rays may be greater than said absolute value of said steepest slope of said outgoing optical rays.

In another embodiment of the present invention, said absolute value of said steepest slope of said incoming optical rays may be smaller than said absolute of said steepest slope of said outgoing optical rays.

Said second side of said optical component may correspond to said first side of said optical component, in particular in cases in which the optical component behaves like a reflector or mirror.

In other embodiments, said second side of said optical component may differ from said first side of said optical component, and in particular may be located opposite to said first side of said optical component with respect to said optical component. In these configurations, said optical component behaves like a lens.

For comparing said absolute values of said steepest slope of said incoming and outgoing optical rays, an index of refraction on said first side of said optical component may be assumed identical with an index of refraction on said second side of said optical component.

Said size of said image object and said size of said source object may be extension of said objects measured in a direction perpendicular to said optical axis.

Said size of said source object may be chosen smaller than a radius of a clear aperture of said optical component. In particular, said size of said source object may be chosen more than five times smaller, and in particular more than ten times smaller than said radius of said clear aperture.

A ratio of said absolute value of said steepest slope of said outgoing rays and said absolute value of said steepest slope of said incoming rays, or vice-versa may amount to at least 1.1, preferably at least 1.6, and in particular at least 1.8. In some embodiments of the present invention, said ratio may be at least 2.0, and preferably at least 2.5.

In an embodiment of the present invention, said optical instrument is adapted to focus a plurality of incident parallel rays into a common focus point.

This feature distinguishes the optical component according to the present invention from conventional lenses with coma aberrations.

Said optical component may comprise at least one optical lens, such as a spherical lens and/or an aspherical lens and/or a gradient-index (GRIN) lens.

In particular, said optical instrument may comprise a toroidal lens and a spherical lens in series.

Alternatively or additionally, said optical component may comprise at least one optical mirror, in particular a parabolic mirror or a parabolic reflector.

In an embodiment, said optical component comprises a meniscus lens, a plano-convex lens and a parabolic reflector in series.

In a preferred embodiment, said optical component is adapted to deflect an optical ray passing through a center of said optical component and incident under a first angle such that said optical ray leaves said optical component under a second angle, wherein an absolute value of said second angle is different from an absolute value of said first angle.

This feature again distinguishes the optical component according to the present invention from optical thin lenses, in which a ray that passes through the center does not change its direction.

Not all optical components may allow to directly define and measure an optical ray passing through a center of the optical component. This is in particular true for mirrors and reflectors. However, in these instances, said first angle and said second angle may be measured in terms of an equivalent representation of said optical component, said equivalent representation given in terms of an optical lens.

Said equivalent representation may be chosen such as to conserve a size of said source object and a size of said image object. Said equivalent representation may, additionally or alternatively, be chosen such as to conserve an entrance aperture and an exit aperture of said optical component.

The deflection of a central ray may amount to an alternative representation of the present invention.

In this instance, the invention relates to an optical component for an optical instrument, wherein said optical component is adapted to deflect an optical ray passing through a center of said optical component and incident under a first angle such that said optical ray leaves said optical component under a second angle, wherein an absolute value of said second angle is different from an absolute value of said first angle.

In a preferred embodiment, said center of said optical component lies on an optical axis of said optical component.

Said first angle and/or said second angle may be measured with respect to an optical axis of said optical component.

In a preferred embodiment, said center lies on an optical plane that deflects a plurality of parallel incident optical rays into a common focus region.

Said absolute value of said second angle may be greater than said absolute value of said first angle.

Alternatively, said absolute value of said second angle may be smaller than said absolute value of said first angle.

A ratio of said absolute value of said second angle and said absolute value of said first angle, or vice-versa may amount to at least 1.1, preferably at least 1.6, and in particular at least 1.8.

In a preferred embodiment, said optical component is an ocular, or forms part of an ocular of said optical instrument.

In another preferred embodiment, said optical component is an objective, or forms part of an objective of said optical instrument.

Said optical component may be adapted to be inserted into an optical path of said optical instrument, in particular removably inserted into said optical path.

In this way, the optical component according to the present invention may be provided in the form of an adapter that may be employed to upgrade existing optical instruments.

The invention also relates to an optical instrument comprising an optical component according to any of the preceding claims.

Said optical instrument may be a telescope, and said optical component may be located in an optical path of said telescope.

In a preferred embodiment, said absolute value of said steepest slope of said incoming rays is larger than said absolute value of said steepest slope of said outgoing rays, and said optical component is located in said optical path such that said first side corresponds to an objective side of said optical instrument and said second side corresponds to an ocular side of said optical instrument.

In these configurations, said optical component may enhance an image intensity of said optical instrument.

Alternatively, said absolute value of said steepest slope of said incoming rays may be smaller than said absolute value of said steepest slope of said outgoing rays, and said optical component may be located in said optical path such that said first side corresponds to an objective side of said optical instrument and said second side corresponds to an ocular side of said optical instrument.

In these instances, said optical component may enhance a spatial resolution of said optical instrument.

In some configurations, said optical instrument may be a microscope, and said optical component may be located in an optical path of said microscope.

The invention further relates to the use of an optical component with some or all of the features described above in an optical telescope, wherein said optical component is placed in an optical path of said telescope to enhance an image intensity of said telescope.

In particular, said image intensity of said telescope may be enhanced by a factor $r^2$, wherein r denotes a ratio of said absolute value of said steepest slope of said incoming rays and said absolute value of said steepest slope of said outgoing rays.

The invention further relates to the use of an optical component according with some or all of the features described above in an optical telescope, wherein said optical component is placed in an optical path of said telescope to enhance a spatial resolution of said telescope.

In particular, said spatial resolution of said telescope may be enhanced by a factor s, wherein s denotes a ratio of said absolute value of said steepest slope of said outgoing rays and said absolute value of said steepest slope of said incoming rays.

Description of Preferred Embodiments

The invention and some of the advantageous effects it entails will now be described with reference to the accompanying drawings, in which:

Fig. 1          is a ray-tracing representation for a lens with positive coma according to the state of the art;

Fig. 2          illustrates the properties of a thin lens according to the state of the art;

Figs. 3a and 3b          schematically illustrate the light propagation properties of optical components according to embodiments of the present invention;

Fig. 4          is a ray-tracing representation for an optical component according to an embodiment of the present invention;

Fig. 5                    is a ray-tracing representation for an optical component according to another embodiment of the present invention;

Figs. 6a and 6b           are schematic thin lens representations of an optical telescope according to the state of the art;

Figs. 7a and 7b           are schematic representations of an imaging by means of an optical thin lens according to the state of the art;

Figs. 8a and 8b           are schematic representations of an imaging by means of an asymmetrical thin lens according to the embodiment of Fig. 5;

Figs. 9a and 9b           illustrate the use of an asymmetrical thin lens in the optical path of a telescope to enhance the image intensity according to an embodiment of the invention;

Figs. 10a and 10b         illustrate the use of an asymmetrical thin lens in an optical telescope to enhance the spatial resolution according to an embodiment of the present invention;

Fig. 11                   illustrates a deflection of a central ray by means of an optical component according to the present invention; and

Figs. 12a -12c            schematically illustrate how to approximate an optical component according to an embodiment of the invention by means of a thin lens.

The invention and some of the advantageous effects it entails will now be described with reference to optical systems transmitting light rays. However, the invention is not limited to the transmission of light, and may be employed more generally whenever signals propagate in a way that can be described by means of rays. In particular, the invention is not limited to visible light, but encompasses the entire spectrum, including infrared light and ultraviolet light.

For simplicity, the examples that follow refer to the optical signal propagation in vacuum, or in an environment having an index of refraction sufficiently close to 1, such as air. However, the invention is not so limited, and also incorporates configurations in which the optical component is placed in an optical medium having an index of refraction that deviates from 1. In particular, said index of refraction may vary, and may differ on different sides of said optical component.

For the sake of comparison, Fig. 2 illustrates how a source object 10 on a first side of an optical thin lens 12 is imaged into an image object 14 on a second side of said optical thin lens 12. The source object 10 may be placed on the optical axis of the thin lens 12, which, in the representation of Fig. 2, corresponds to the x-axis.

The source object 10 is located at a position $x_s$ along the optical axis at a distance $l_s$ away from the center of the thin lens 12. The distance $l_s$ is chosen such that the size $y_i$ of the image 14 is identical (but inverted) to the size $y_s$ of the source object 10. The sizes or heights of the source object 10 and the image object 14 may be measured in a direction perpendicular to the optical axis, and hence in a direction along the axis y in Fig. 2.

The clear aperture of the lens 12 defines the area of the lens 12 suitable for imaging, i.e. the area of the thin lens 12 on which rays emanating from the source object 10 are deflected into the image object 14. In Fig. 2, the clear aperture is given in terms of its radius d. The size $y_s$ of the source object 10 is chosen such that $|y_s| \ll d$, and in particular $5 \cdot |y_s| < d$.

In Fig. 2, $s_s$ denotes the steepest slope at which rays propagating from the source object 10 enter the thin lens. Correspondingly, $s_i$ denotes the steepest slope at which rays coming from the lens 12 converge at the image object 14. In a thin lens, the absolute value of $s_s$ is equal to the absolute value of $s_i$, $|s_s| = |s_i|$.

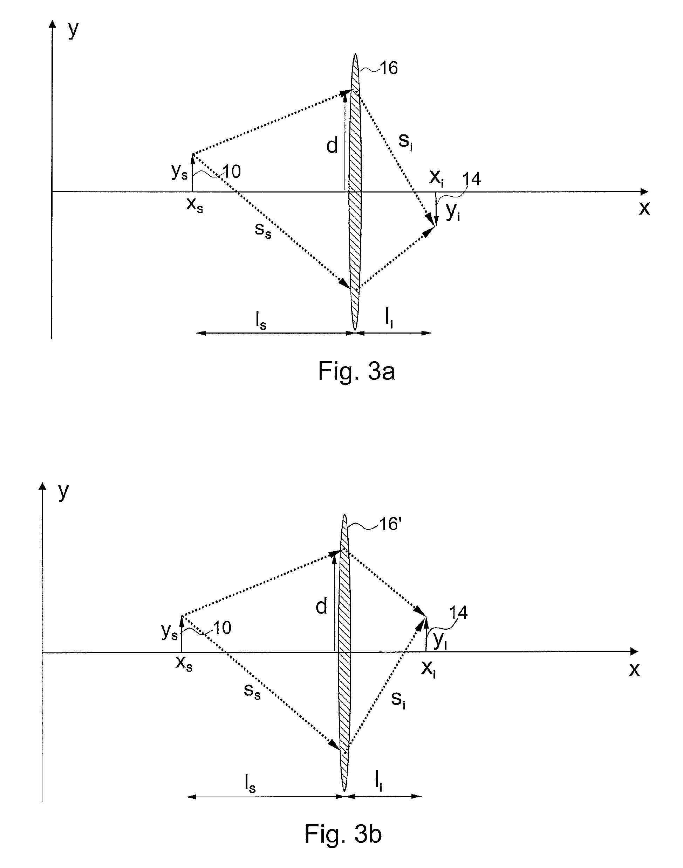

Fig. 3a shows a corresponding representation, wherein the thin lens 12 is replaced by an optical component 16 according to the present invention. Corresponding elements are designated with the same reference signs in Figs. 3a and 2. In particular, the optical component 16 images the source object 10 located on a first side of the optical component 16 at a position $x_s$ on the optical axis at a distance $l_s$ away from the optical component 16 into the image object 14 located on a second side of the optical component opposite to said first side, and located at a position $x_i$ at a distance $l_i$ away from the optical component 16. As can be taken from Fig. 3a, the distance $l_s$ is again chosen such that the size or height $y_i$ (measured in a direction y perpendicular to the optical axis) of the image object 14 coincides with the size $y_s$ (again measured in direction y) of the source object 10.

In Fig. 3a, the steepest slope of the incoming optical rays is again denoted by $s_s$, and the steepest slope of the outgoing rays by $s_i$. However, contrary to the symmetric configuration of a conventional thin lens 12 as shown in Fig. 2, the absolute value of the steepest slope $s_s$ of the incoming rays, i.e. the rays propagating from the source object 10 towards the optical component 16, is much smaller than the absolute value of the steepest slope $s_i$ of the outgoing rays, i.e., the rays coming from the optical component 16 and converging at the image object 14, $|s_s| < |s_i|$. Due to the deviation from the symmetric configuration of Fig. 2, the optical component 16 can be called an "asymmetrical thin lens".

Fig. 3b is a schematic representation of an optical component 16' according to another embodiment of the present invention. The configuration of Fig. 3b largely corresponds to the configuration of Fig. 3a, with the only exception that the image is not inverted, i.e., both $y_s$ and $y_i$ are measured along the positive y axis. Again, the distance $l_s$ of the source object 10 from the optical component 16' is chosen such that $y_i$ equals $y_s$. As in Fig. 3b, the absolute value of the steepest slope $s_s$ of the incoming rays is again much smaller than the absolute value of the steepest slope $s_i$ of the outgoing rays, i.e., $|s_s| < |s_i|$. Again, the optical component 16' can be called an asymmetrical thin lens.

Figs. 3a and 3b are schematic representations that serve to illustrate the light path on the way from the source object 10 to the image object 14, as well as the geometrical relations between the incoming and outgoing rays. In the schematic representations, the optical components 16, 16' are represented as a single element, in the form of a lens. However, this is for illustrative purposes only, and in practical implementations the optical components 16, 16' may comprise a plurality of optical elements, including lenses, parabolic mirrors, or reflectors.

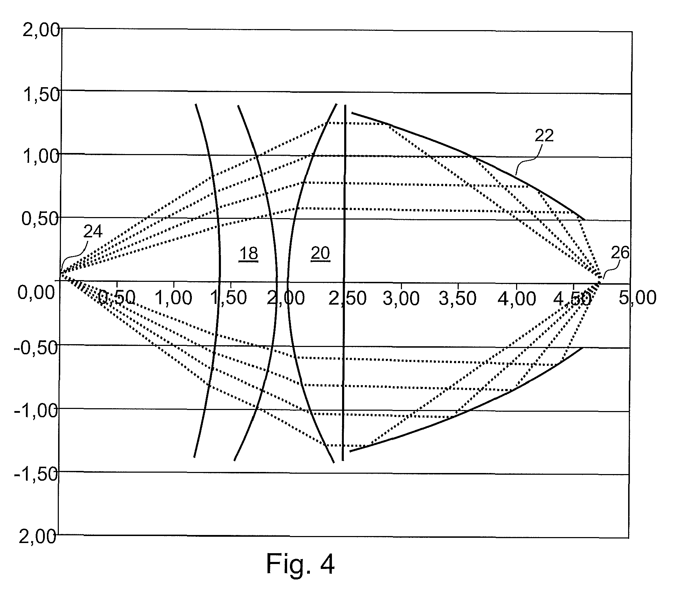

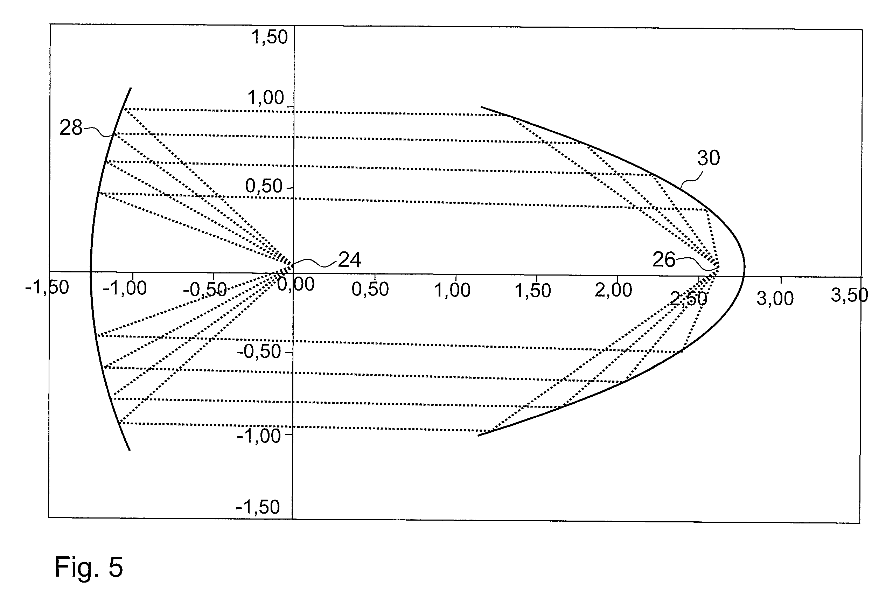

Two implementations of optical components according to the present invention will now be described with reference to the ray tracing diagrams of Figs. 4 and 5.

Fig. 4 is a ray tracing diagram for a configuration comprising a meniscus lens 18, a plano-convex lens 20 and a parabolic mirror 22 arranged in series. Rays of light (represented by dashed lines) are coming from the point source 24 at (0.00, 0.05). They are first refracted by the meniscus lens 18 (solid curved lines intersecting the x axis at x = 1.40 and x = 1.90). Then they are refracted by the plano-convex lens 20 (solid curved lines intersecting the x axis at x = 2.00 and x = 2.50). Then, they are reflected by the mirror 22 (solid curve $y = +/-\sqrt{(-0.75x + 3.70)}$) to come to focus centered at the point image 26 at (4.75,0.0348). The radius of curvature of the left surface of the meniscus lens 18 is 5.00, and the radius of curvature of the right surface of the meniscus lens is 3.00. The index of refraction is variable (n = 0.350y + 1.41). The radius of curvature of the left surface of the plano-convex lens 20 is 2.55, and the radius of curvature of the right surface of the plano-convex lens 20 is 1000. The index of refraction is variable (n = -0.538y + 2.32). The steepest angle at which light converges at the focal point of the parabolic reflector 22 for rays originating at (0.00,0.00) is 64.8° which corresponds to a numerical aperture NA = 0,90.

The parabolic mirror 22 shown in the configuration of Fig. 4 is a hollow reflector, like the reflectors used sometimes in flashlights and automobile headlights. However, a solid parabolic concentrator, made from a solid piece of refracting material with the outer surface in the shape of a paraboloid can likewise be used. Parabolic concentrators have usually flat surfaces at the entrance and the exit apertures and are made of material of constant index of refraction. But when used for imaging, as in the embodiments of the present invention, the entrance and the exit apertures can be provided with curved surfaces which can provide additional means of correction of the image formed by such parabolic concentrators. Additional means of correction can be provided by making the parabolic concentrators from materials with variable index of refraction.

The meniscus lens 18 and the plano-convex lens 20 in Fig. 4 in combination produce a positive coma effect. This positive coma corrects the positive coma of the parabolic mirror 22, resulting in a configuration that has the properties of an asymmetrical thin lens as shown in Fig. 3a. In the configuration of Fig. 4, the steepest slope for the incoming rays is $s_s = 0.62$, and the steepest slope for the outgoing rays is $s_i = 2.13$, resulting in $|s_i| / |s_s| = 3.44$.

Additional optical components may be added to the configuration of Fig. 4 to correct for chromatic aberration, spherical aberration or other optical defects, so to further enhance the quality of the optical component.

Fig. 5 is a ray tracing representation of an optical component according to another embodiment of the present invention which behaves as the asymmetrical thin lens of Fig. 3b. The configuration of Fig. 5 comprises a concave converging parabolic mirror 28 and a concave converging parabolic reflector 30 in series: The solid curve on the left ($y = +/-\sqrt{(5.00x + 6.25)}$ represents a two-dimensional cross-section of a parabolic reflective surface (concave converging parabolic mirror 28). The solid curve on the right ($y = +/-\sqrt{(-0.61x + 1.70)}$) represents a two-dimensional cross-section of a parabolic reflective surface (concave converging parabolic reflector 30). The dashed lines represent light rays coming from a point source 24 at (0.00, 0.0300). They are reflected by the mirror 28 on the left, approaching the mirror 30 on the right as nearly parallel rays. The mirror 28 on the left is selected to have strong positive coma which closely matches that of the mirror 30 on the right. The mirror 28 on the left is correcting coma of the mirror 30 on the right. The image is formed by the parabolic reflector 30 on the right at the image point 26 at (2.63,0.0295). For the source located on the optical axis, the steepest slope for the rays emerging from the source is +/-0.900, and the steepest slope for the rays converging at the image is +/-2.73, hence $s_s = -0.900$ and $s_i = -2.73$, resulting in $|s_i| / |s_s| = 3.03$.

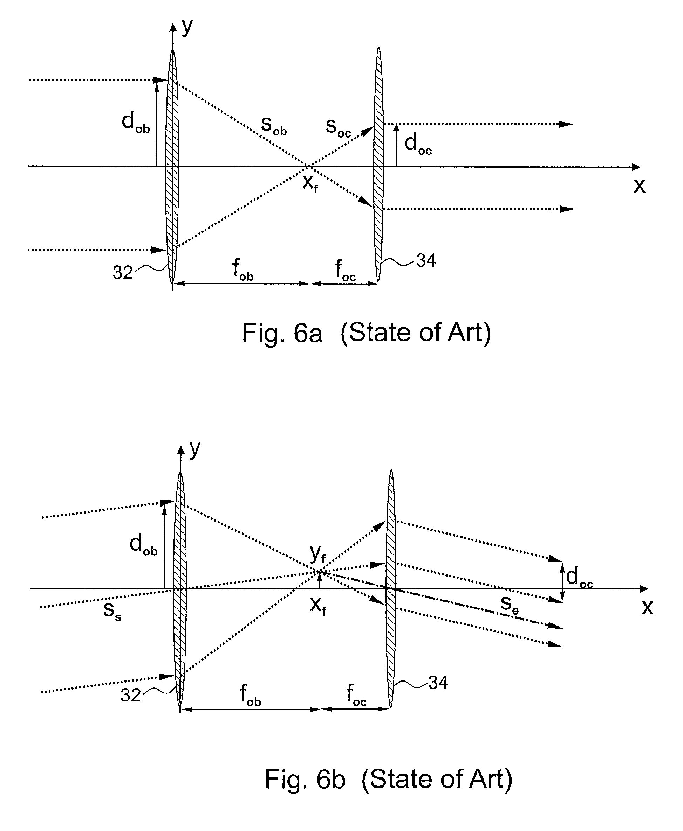

Applications of optical components according to embodiments of the present invention to optical instruments, in particular telescopes, will now be described with reference to Figs. 6a to 10b.

For comparison and reference, Fig. 6a shows a schematic thin lens representation of an optical telescope according to the state of the art. An objective lens 32 is located at x = 0 on the optical axis (x-axis), and an ocular lens 34 is located at x = $f_{ob}$ + $f_{oc}$, where $f_{ob}$ denotes the focal length of the objective lens 32 and $f_{oc}$ denotes the focal length of the ocular lens 34. Rays of light (represented by dashed lines) arriving from a point source at x = -∞ on the optical axis pass through the objective 32, converge at the objective's focal point ($x_f$,0), pass through the ocular 34, and exit as rays parallel to the optical axis. The steepest slope at which light converges to the focal point $x_f$ (the slope of the line connecting the edge of the clear aperture of the objective 32 and the focal point $x_f$) is denoted as $s_{ob}$, and the steepest slope at which light travels from the focal point $x_f$ to the ocular is denoted as $s_{oc}$.

As a telescope usually has a clear aperture (size of the objective lens through which light can enter the telescope) much greater than that of the iris of the observer, i.e., it gathers more light than the eye can. The radius or the clear aperture $d_{oc}$ of the ocular lens 34 may be chosen equal to the average radius of a fully open human iris (approximately 4 mm). Denoting the radius of the clear aperture of the objective lens by $d_{ob}$, the light gathering ratio of the telescope is:

$$L = d_{ob}/d_{oc} \qquad\qquad (1)$$

with

$$d_{oc} = f_{oc}|s_{oc}| \text{ and } d_{ob} = f_{ob}\,|s_{ob}|. \qquad\qquad (2)$$

Since a the medium of constant index of refraction light travels in a straight line, we have $|s_{oc}| = |s_{ob}|$, as in Fig. 2.

So, the light gathering ratio of a telescope can also be expressed as

$$L = (f_{ob}\,s_{ob})/(f_{oc}\,s_{ob}) = f_{ob}/f_{oc}. \qquad\qquad (3)$$

Fig. 6b shows the same configuration as in Fig. 6a, but with the rays of light (dashed lines) arriving from a point source at x = -∞ which is not on the optical axis (the x axis). The rays pass through the objective lens 32, converge at the objective's focal point ($x_f$,$y_f$), pass through the ocular lens 34, and exit as rays parallel to the line passing through the focal point ($x_f$,$y_f$) and the center of the ocular lens 34.

The conventional telescope in Figures 6a and 6b magnifies the image of an observed object, and the magnification can be expressed as the ratio between the slope of the parallel rays of light exiting the telescope $s_e$ and the slope of the parallel rays of light coming from a distant source into the telescope $s_s$,

$$M = s_e/s_s \qquad\qquad (4)$$

Since light coming from the source which passes through the center of the objective continues in the same direction to the focal point,

$$s_s = y_f/f_{ob}. \qquad\qquad (5)$$

Also, since the light traveling from the focal point to the center of the ocular continues in a straight line out of the telescope,

$$s_e = y_f/f_{oc}. \qquad\qquad (6)$$

So magnification can be expressed as

$$M = (y_f/f_{oc})/(y_f/f_{ob}) = f_{ob}/f_{oc}. \qquad\qquad (7)$$

The beam of light entering the telescope is L times wider than the beam exiting the telescope, and therefore, $L^2$ times more light enters the eye of the observer than when the same object is viewed with the naked eye. However, the image seen through the telescope is also magnified M times, and therefore, it is spread over an $M^2$ times larger area on the eye's retina than when the same object is viewed with the naked eye. Effectively, the object will appear equally bright when viewed through the telescope as when viewed with the naked eye (ignoring absorption and scattering loss present in an actual telescope). If we define telescope image intensification gain as

$$G = L^2 / M^2,\qquad(8)$$

applying

$$M = f_{ob}/f_{oc} \text{ and } L = f_{ob}/f_{oc}\qquad(9)$$

leads to

$$L = M, \text{ and } G = 1.\qquad(10)$$

In general terms this restriction is related to the principles of the paraxial theory in geometrical optics, the famous Gaussian lens formula

$$1/l_i + 1/l_s = 1/f.\qquad(11)$$

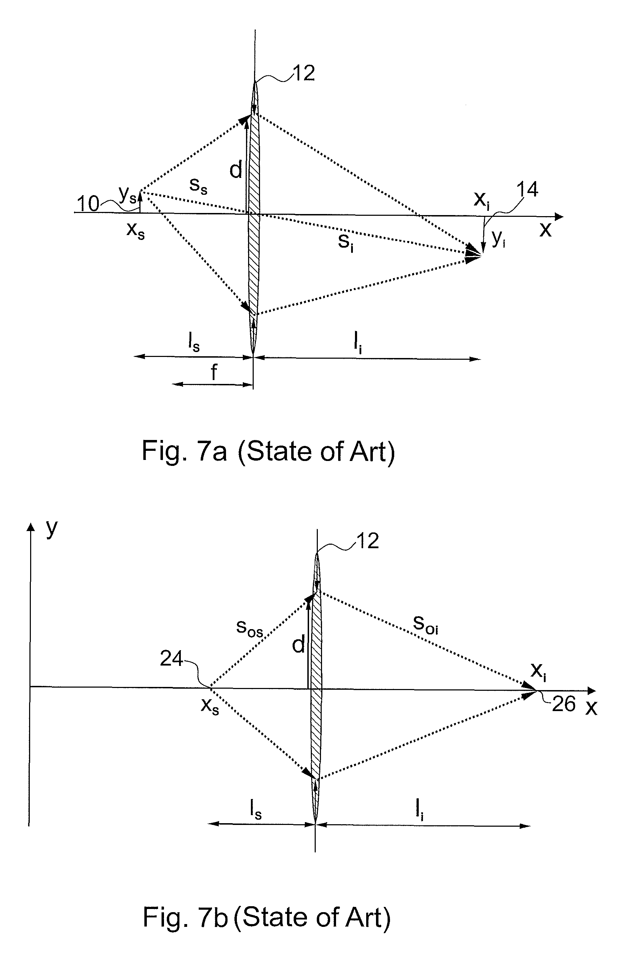

Figures 7a and 7b are ray tracing representations of a conventional thin lens, such as the objective lens 32 or the ocular lens 34 in the conventional optical telescope of Figs. 6a and 6b. Fig. 7a illustrates the imaging of a finite-size source object 10 of height $y_s$ at a distance $l_s$ away from the center of the thin lens 12 into an image object 14 located at the opposite side of the thin lens 12 at a distance $l_i$ and having a height $y_i$. In Fig. 7b, the thin lens 12 projects the point source 24 located at $(x_s,0)$ to the point image 26 located at $(x_i,0)$. The slope of the steepest ray (measured with respect to the optical axis) emanating from the source $s_{os} = d/l_s$, and the slope of the steepest ray (measured with respect to the optical axis) converging at the focal point where the image is formed is $s_{oi} = -d/l_i$.

Therefore,

$$s_{os}/s_{oi} = (d/l_s)/(-d/l_i) = -l_i/l_s = y_i/y_s\qquad(12)$$

or

$$|s_{os}|/|s_{oi}| = |y_i/y_s|.\qquad(13)$$

The ratio $M_t = y_i/y_s$ on the right-hand side of Equation (12) is sometimes denoted transverse magnification.
We may also define the effective focal length

$$EFL = y_i/s_i. = l_i.\qquad(14)$$

or

$$EFL = y_i/s_s\qquad(15)$$

Since for a thin lens

$$s_i = s_s.\qquad(16)$$

In the case when the distance to the source approaches infinity (infinite conjugate),

$$l_i = f = EFL, \qquad (17)$$

where f is the focal length of the lens. In other words, EFL is the distance between a thin lens and the image it forms. Finally,

$$|s_{oi}| = d/EFL. \qquad (18)$$

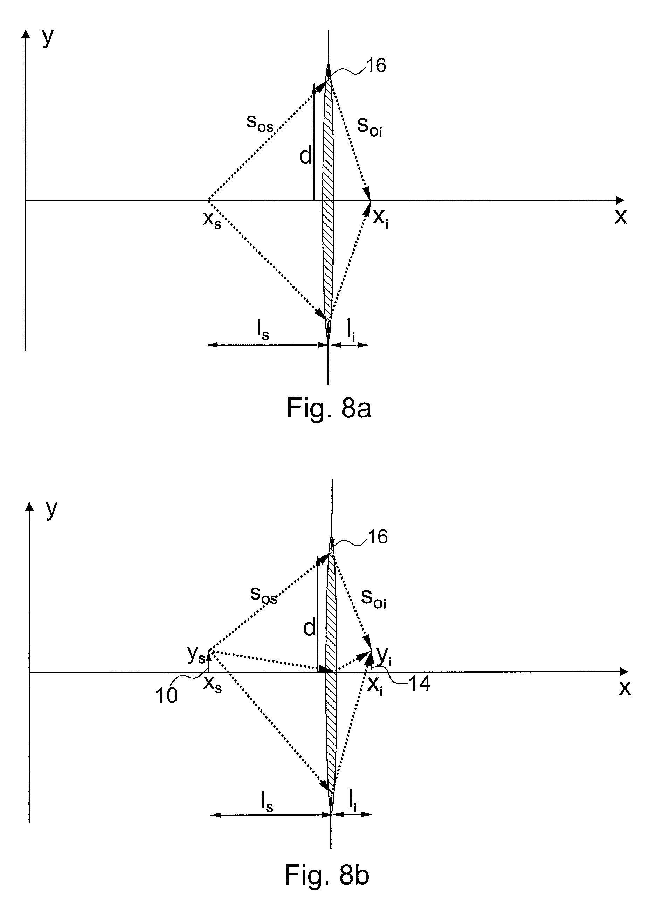

Fig. 8a is a corresponding representation, but for the asymmetrical thin lens configuration of Fig. 5 rather than for the thin lens 12 of Fig. 7. Here, we have

$$|s_{os}|/|s_{oi}| \simeq 1/3 \neq |y_i/y_s| \equiv MT \simeq 1. \qquad (19)$$

Fig. 8b shows the same configuration, but for a point source at $(x_s, y_s)$. Here, transverse magnification $M_T = y_i/y_s = 1 \neq |l_i/l_s|$. This approximation applies a simple principle by which the following parameters are transferred from the configuration in Figure 5 to the configuration in Figures 8a and 8b: the steepest slope of the rays emanating from the source 10, the size of the source 10 (linear perpendicular distance from the optical axis), the steepest slope of the rays converging at the image 14, and the size of the image 14 (linear perpendicular distance from the optical axis).

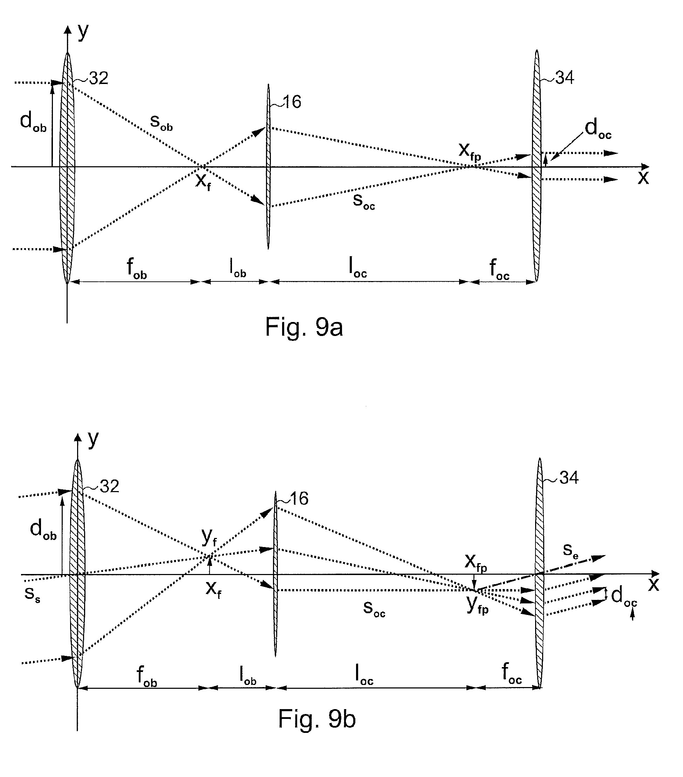

Fig. 9a shows the asymmetrical thin lens 16 of Figs. 8a and 8b inserted in the optical path of a telescope between the objective lens 32 and the ocular lens 34. Fig. 9b is a corresponding representation, with the only difference that the source is not on the optical axis (x-axis).

As can be taken from Fig. 9a and 9b, the asymmetrical thin lens 16 is arranged in the optical path such that the steepest slope $s_{ob}$ of the incoming rays (on the side of the asymmetrical thin lens 16 facing the objective lens 32) is larger than the steepest slope $s_{oc}$ of the outgoing rays (on the side of the asymmetrical thin lens 16 facing the ocular lens 34).

The asymmetrical thin lens projects the image in the focal plane of the objective 32 to the point $(x_{fp}, y_{fp})$. The image in the focal plane of the objective 32 and the image projected by the asymmetrical thin lens 16 are of equal size. This is a deviation from the paraxial theory by which $y_{fp}$ should be there times larger than $y_f$.

In the case of the telescope described in Figure 9a and 9b, the light gathering power is

$$L = d_{ob}/d_{oc} \qquad (20)$$

with

$$d_{oc} = f_{oc}|s_{oc}| \text{ and } d_{ob} = f_{ob}|s_{ob}|. \qquad (21)$$

However, in this case $s_{oc}$ in not equal to $s_{ob}$, but instead

$$|s_{ob}| = 3|s_{oc}|. \qquad (22)$$

So, the light gathering power of this telescope can be expressed as

$$L = (f_{ob} \, 3|s_{oc}|)/(f_{oc} \, |s_{oc}|) = 3f_{ob}/f_{oc}. \qquad (23)$$

In this case,

$$s_s = |y_f|/f_{ob} \text{ and } s_e = |y_{fp}|/f_{oc}. \qquad (24)$$

Since $y_f = y_{fp}$, the magnification of this telescope can be expressed as

$$|M| = |(y_{fp}/f_{oc})/(y_f/f_{ob})| = |(y_f/f_{oc})/(y_f/f_{ob})| = f_{ob}/f_{oc}. \qquad (25)$$

This telescope's image intensification gain is

$$r := G = L^2 / M^2 = |s_{ob}|^2 / |s_{oc}|^2 = 9 \qquad (26)$$

Hence, in the configuration of Figs. 9a and 9b the asymmetrical thin lens serves as an image intensifier.

Conveniently, the same method which transforms a telescope into an optical image intensifier can alter another limitation of a telescope - its resolving power. The smallest detail visible on an object viewed through a telescope is limited by diffraction - if all aberrations are corrected in the objective and the ocular well enough so that the quality of the image is limited by diffraction alone.

When parallel rays of light from a distant point source pass through a well-corrected objective, they do not converge into an infinitely small point in the focal plane, but they converge into a small disk known as the Airy disk and decreasingly bright concentric rings surrounding it. Most of the radiation at the focal point is concentrated within the Airy disk which has the size (its radius r) directly proportional to the focal length of the lens (f) and the wavelength of the light being focused ($\lambda$) and inversely proportional to the diameter of the objective (D). If d is the radius of the objective (D=2d),

$$r = 1.22f\lambda/D = 1.22f\lambda/2d = (1.22\lambda/2)(f/d) \qquad (27)$$

In case of the conventional telescope described in Figures 6a and 6b,

$$r_f = (1.22\lambda/2)(f_{ob}/d_{ob}) = (1.22\lambda/2)/s_{ob} \qquad (28)$$

In other words, the radius $r_f$ of the Airy disk is inversely proportional to the slope of the line connecting the edge of the clear aperture of the objective and the focal point.

If we define the resolution ratio as the ratio between the image produced by the objective of the telescope described in Figures 6a and 6b and the size of the Airy disk,

$$r_f = y_f/r_f = (y_f s_{ob})/(1.22\lambda/2). \qquad (29)$$

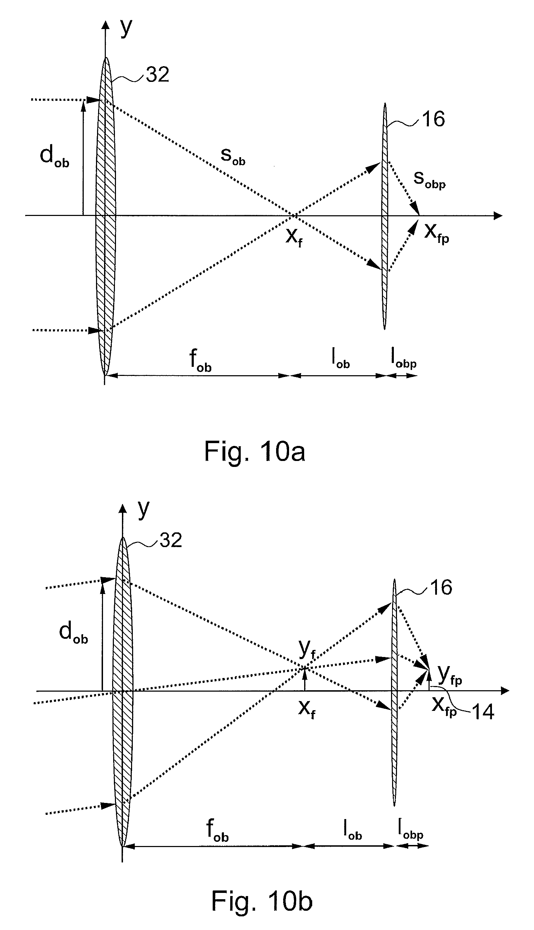

In Figure 10a we modify the telescope in Figure 6a by placing the asymmetrical thin lens 16 described in Figures 8a and 8b in its light path instead of the ocular 34. However, in this case the asymmetrical thin lens is flipped around so that the side with the longer distance between the image and the lens is facing the objective lens 32.

Fig. 10b shows the same configuration as in Fig. 10a, but again with incoming rays inclined at an angle with respect to the optical axis (x-axis). The image produced by the telescope in Fig. 10b is equal in size $y_f$ to the image formed by the unmodified objective ($y_{fp}$).

The modified telescope in Figures 10a and 10b produces images of the same size as the telescope in Figures 6a and 6b, and the radius of the Airy disk it produces is

$$r_{fp} = (1.22\lambda/2)/s_{obp}. \qquad (30)$$

Since $s_{obp} = 3s_{ob}$, we can also define $r_{fp}$ as

$$r_{fp} = (1.22\lambda/2)/(3s_{ob}). \qquad (31)$$

The ratio between the image produced by the objective of the telescope described in Figures 10a and 10b and the size of the Airy disk it produces is than

$$R_{fp} = y_{fp}/r_{fp} = (y_{fp}3s_{ob})/(1.22\lambda/2). \qquad (32)$$

Since $y_f=y_{fp}$ and $S_{obp} = 3s_{ob}$,

$$R_{fp} = (y_f 3s_{ob})/(1.22\lambda/2). \qquad\qquad (33)$$

Finally, the ratio between the resolution ratios of the modified and the unmodified telescope is

$$R_{fp}/R_f = ((y_f s_{obp})/(1.22\lambda/2))/((y_f s_{ob})/(1.22\lambda/2))$$

or

$$s := R_{fp}/R_f = s_{obp}/s_{ob} = 3. \qquad\qquad (34)$$

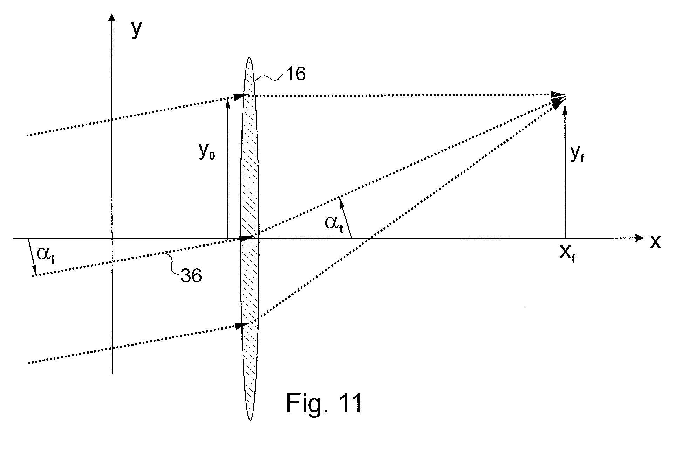

The properties of the asymmetrical thin lens according to embodiments of the invention have been described above with relation to the difference of the steepest slopes of incoming and outgoing rays. An alternative characterization can be given in terms of the deflection of a central ray. As described in the introductory part of the specification, a conventional thin lens 12 is characterized, among other properties, in that a ray passing through the center of the lens does not change its direction. This is different for asymmetrical thin lenses, as illustrated in Fig. 11.

An incoming ray 36 from a point source at x = -∞ is inclined to the optical axis (x-axis) at an angle $\alpha_i$, passes through the center of the asymmetrical thin lens 16 and continues in a different direction to the focal point at $(x_f, y_f)$ under an angle $\alpha_t$ to the optical axis.

In a conventional thin lens, we have $\alpha_t = \alpha_i$. Instead, in an asymmetrical thin lens 16 according to the present invention $\alpha_t$ may be smaller or larger than $\alpha_i$, and may deviate substantially from it. For instance, the ratio $\alpha_t/\alpha_i$, or its inverse, may be larger than 1.1, 1.6, or 1.8.

The characterization of the asymmetrical thin lens 16 in terms of deviations of the direction of a central ray is directly applicable and measurable for a lens configuration, as shown in Fig. 11.

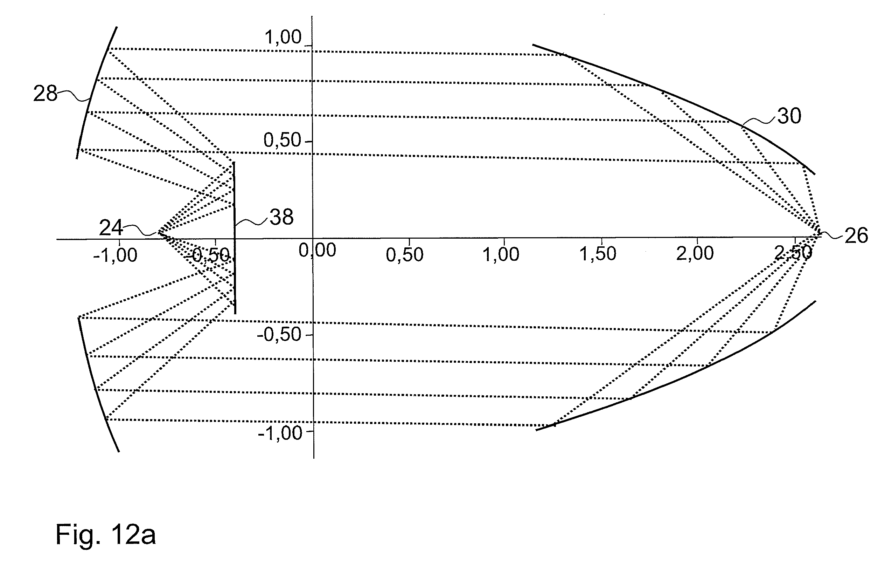

However, as will now be described with reference to Figs. 12a to 12c, any real asymmetrical thin lens configuration (possibly involving a plurality of optical components including spherical or aspherical lenses or mirrors, gradient-index lenses (GRIN), prisms, corrector plates, etc.) may always be transformed into an equivalent representation in the form of Fig. 11, and the deviation of the central ray may then be determined for the equivalent representation. The conversion will now be explained for the example configuration of Fig. 5, but can be performed in the same way for other optical components. This allows to apply the characterization in terms of the deflection of a central ray 36 to all asymmetrical thin lenses.

In a first step, we modify the configuration in Fig. 5 to allow for external rays to enter the configuration as well as to allow the rays existing the configuration to propagate freely. This may be performed by cutting open the parabolic mirror 28 and the parabolic reflector 30, and inserting a flat mirror 38, as shown in Fig. 12a.

The interrupted solid curve on the left (y = +/-√(5.00x + 6.25) represents a two-dimensional cross-section of the parabolic reflective surface (concave converging parabolic mirror 28 with a hole in the middle). The interrupted solid curve on the right (y = +/-√(-0.61x + 1.70) represents a two-dimensional cross-section of the parabolic reflective surface (concave converging parabolic reflector 30 with a hole in the middle). The solid vertical line intercepting the x axis (the optical axis) at the point (-0.4,0) is a flat mirror 38. The dashed lines represent light rays coming from a point source 24 at (-0.80,0.0300). They are reflected by the flat mirror 38 and directed towards the parabolic mirror on the left, which reflects them as nearly parallel rays towards the parabolic reflector 30 on the right. The parabolic mirror 28 on the left is selected to have positive coma which closely matches that of the parabolic reflector 30 on the right. In other words, the parabolic mirror 28 on the left is correcting the coma 30 of the parabolic reflector on the right, and vice versa. The image formed by the parabolic reflector 30 on the right is approximately equal in size to the source and it is located at the point 26 (2.63,0.0295). For the source located on the optical axis, the steepest slope for the rays emanating from the source 24 is +/-0.9, and the steepest slope for the rays converging at the image 26 is +/-2.73.

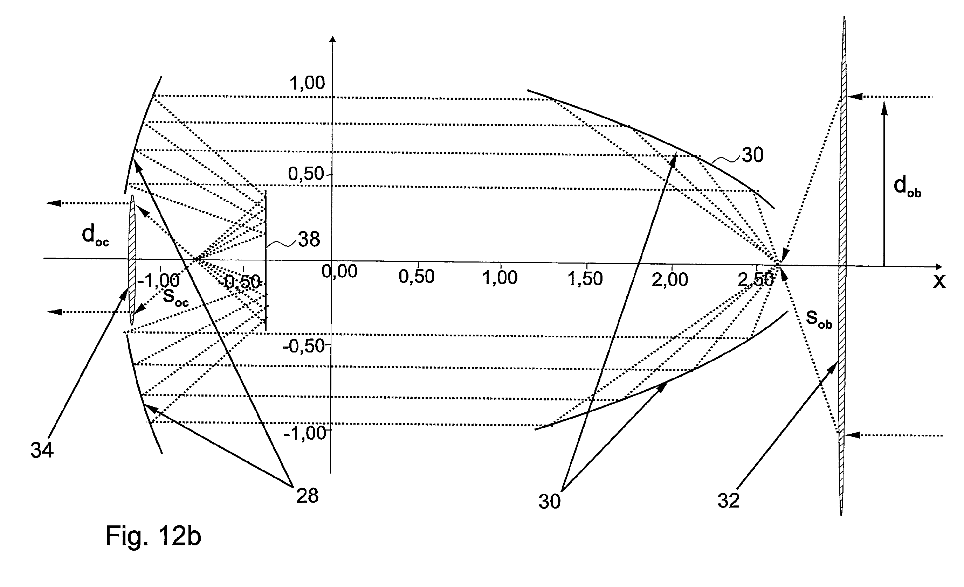

In Fig. 12b, the configuration of Fig. 12a is integrated in a thin lens representation of a telescope with the objective lens 32 and the ocular 34 of the same focal length. The dashed lines represent light rays coming from a distant point source on the optical axis on the right. The rays are refracted by the objective 32 to converge at its focal point at (2,63,0.00). They are reflected by the parabolic reflector 30 on the right, reflected by the parabolic mirror 28 on the left, and reflected by the flat mirror 38 to converge at the ocular's focal point at (-0.80,0.00). Then, they are refracted by the ocular 34 to propagate as parallel rays toward the left. The steepest slope at which rays converge at the objective's focal point $s_{ob}$ = +/-2.73. The steepest slope at which rays propagate from the ocular's focal point to the ocular $s_{oc}$ = +/-0.9. Consequently, the width of beam of light entering the telescope is three times wider than the beam exiting the telescope ($d_{ob} = 3d_{oc}$).

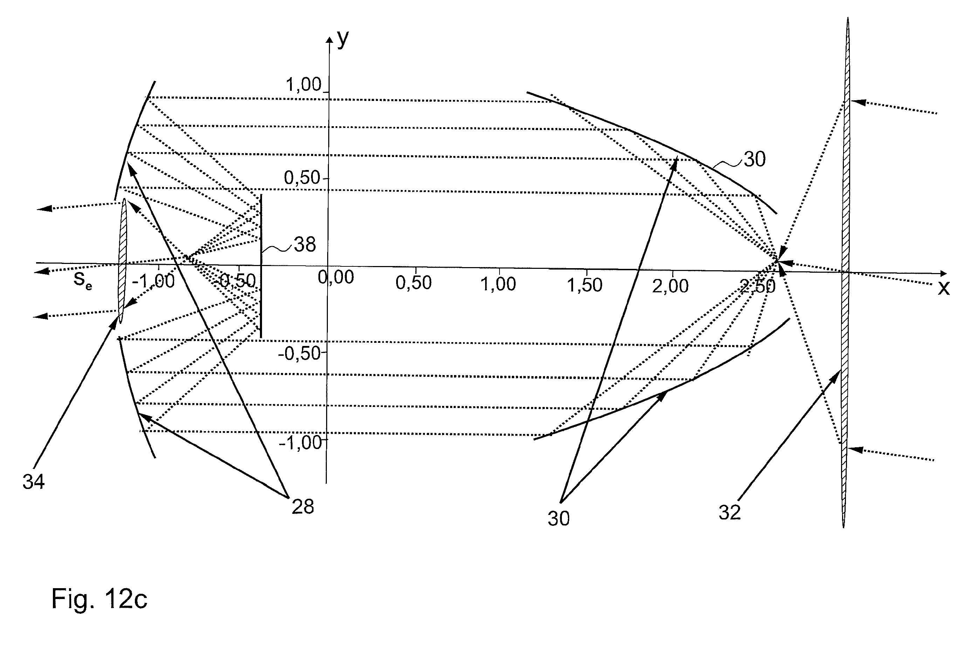

Fig. 12c shows the same configuration as in Fig. 12b, but for light rays coming from a distant point source on the right which is not on the optical axis (x-axis). The rays are refracted by the objective lens 32 to converge at its focal point at (2.63,0.0295). They are reflected by the parabolic reflector 30 on the right, reflected by the parabolic mirror 28 on the left, and reflected by the flat mirror 38 to converge at the ocular's focal point at (-0.80,0.0300). Since the focal lengths of the objective 32 and the ocular 34 are equal and the size of the images in their focal planes is the nearly the same, $|s_s| = |s_e|$. The magnification of the telescope M = $|s_e/s_s| \simeq 1$. The overall effect (the ratio between L and M) of inserting the configuration in Figure 12a in the telescope is the same as if the asymmetrical thin lens such as described in Figures 8a and 8b were used instead.

The description of the preferred embodiments and the examples merely serve to illustrate the invention, but should not be understood to imply any limitation. The scope of the invention is to be determined solely by means of the appended claims.

An **Optical** Component for **an** Optical Instrument, and Methods of Use for Enhancing **an** Image Intensity or Spatial Resolution

Reference Signs

| | |
|---|---|
| 10 | source object |
| 12 | thin lens |
| 14 | image object |
| 16, 16' | optical component, asymmetrical thin lens |
| 18 | meniscus lens |
| 20 | plano-convex lens |
| 22 | parabolic mirror |
| 24 | point source |
| 26 | point image |
| 28 | concave converging parabolic mirror |
| 30 | concave converging parabolic reflector |
| 32 | objective lens |
| 34 | ocular lens |
| 36 | incoming central ray |
| 38 | flat mirror |

**Claims**

1. An optical component (16, 16') for an optical instrument;
   said optical component (16, 16') being adapted to deflect optical rays passing through said optical component (16, 16') and to image a source object (10) placed on an optical axis on a first side of said optical component (16, 16') into an image object (14) placed on said optical axis on a second side of said optical component (16, 16');
   wherein, when a size of said image object (14) coincides with a size of said source object (10), an absolute value of a steepest slope of incoming optical rays, said incoming optical rays emanating from said source object (10) and propagating through said optical component (16, 16') to said image object (14), is different from an absolute value of a steepest slope of outgoing optical rays, said outgoing optical rays emanating from said optical component (16, 16') towards said image object (14).

2. The optical component (16, 16') according to claim 1, wherein a ratio of said absolute value of said steepest slope of said outgoing rays and said absolute value of said steepest slope of said incoming rays, or vice versa, is at least 1.1, preferably at least 1.6, and in particular at least 1.8.

3. The optical component (16, 16') according to claim 1 or 2, wherein said optical component (16, 16') is further adapted to focus a plurality of incident parallel rays into a common focus point.

4. The optical component (16, 16') according to any of the preceding claims, wherein said optical component (16, 16') comprises at least one optical lens (18, 20), in particular a spherical or aspherical lens.

5. The optical component (16, 16') according to any of the preceding claims, wherein said optical component (16, 16') comprises a toroidal lens and a spherical lens in series.

6. The optical component (16, 16') according to any of the preceding claims, wherein said optical component (16, 16') comprises at least one optical mirror (22, 28,30), in particular a flat, spherical or aspherical mirror.

7. The optical component (16, 16') according to any of the preceding claims, wherein said optical component (16, 16') comprises a meniscus lens (18), a plano-convex lens (20) and a parabolic reflector (22) in series.

8. The optical component (16, 16') according to any of the preceding claims, wherein said optical component (16, 16') is adapted to deflect an optical ray (36) passing through a center of said optical component (16, 16') and incident under a first angle $(\alpha_i)$ such that said optical ray (36) leaves said optical component (16, 16') under a second angle $(\alpha_t)$, wherein an absolute value of said second angle $(\alpha_t)$ is different from an absolute value of said first angle $(\alpha_i)$.

9. The optical component (16, 16') according to any of the preceding claims, wherein said optical component (16, 16') is an ocular (34), or forms part of an ocular (34) of said optical instrument.

10. The optical component (16, 16') according to any of the preceding claims, wherein said optical component (16, 16') is an objective (32), or forms part of an objective (32) of said optical instrument.

11. The optical component (16, 16') according to any of the preceding claims, wherein said optical component (16, 16') is adapted to be removably inserted into an optical path of said optical instrument.

12. An optical instrument comprising an optical component (16, 16') according to any of the preceding claims.

13. The optical instrument according to claim 12, wherein said optical instrument is a telescope, and said optical component (16, 16') is located in an optical path of said telescope.

14. Use of an optical component (16, 16') according to any of the claims 1 to 11 in an optical telescope, wherein said optical component (16, 16') is placed in an optical path of said telescope to enhance an image intensity of said telescope.

15. Use of an optical component according to any of the claims 1 to 11 in an optical telescope (16, 16'), wherein said optical component (16, 16') is placed in an optical path of said telescope to enhance a spatial resolution of said telescope.

Fig. 1    (State of Art)

Fig. 2    (State of Art)

Fig. 3a

Fig. 3b

Fig. 4

Fig. 5

Fig. 6a (State of Art)

Fig. 6b (State of Art)

Fig. 7a (State of Art)

Fig. 7b (State of Art)

Fig. 8a

Fig. 8b

Fig. 9a

Fig. 9b

Fig. 10a

Fig. 10b

Fig. 11

Fig. 12a

Fig. 12b

Fig. 12c

Europäisches
Patentamt

European
Patent Office

Office européen
des brevets

# EUROPEAN SEARCH REPORT

Application Number

EP 15 17 6795

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/96912 A1 (MULTICHANNEL INSTR AB [SE]; LINDBLOM PETER [SE]) 20 December 2001 (2001-12-20) * page 3, line 4 - page 7, line 9; figures 1-4 * | 1-15 | INV. G02B17/00 G02B17/06 G02B17/08 G02B13/26 |
| X | JP S57 11333 A (CANON KK) 21 January 1982 (1982-01-21) * abstract; figures 1-7 * | 1-15 | |
| X | US 3 455 623 A (HARRIS CLYDE W) 15 July 1969 (1969-07-15) * column 7, line 2 - column 8, line 58; figure 4 * | 1-15 | |

TECHNICAL FIELDS
SEARCHED      (IPC)

G02B

The present search report has been drawn up for all claims

| Place of search | Date of completion of the search | Examiner |
|---|---|---|
| Munich | 29 April 2016 | Casse, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 17 6795

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2016

| Patent document cited in search report | | Publication date | Patent family member(s) | | Publication date |
|---|---|---|---|---|---|
| WO 0196912 | A1 | 20-12-2001 | AU | 6448901 A | 24-12-2001 |
| | | | CA | 2412903 A1 | 20-12-2001 |
| | | | CN | 1447927 A | 08-10-2003 |
| | | | EP | 1299755 A1 | 09-04-2003 |
| | | | JP | 2004503811 A | 05-02-2004 |
| | | | SE | 515659 C2 | 17-09-2001 |
| | | | US | 2003165024 A1 | 04-09-2003 |
| | | | WO | 0196912 A1 | 20-12-2001 |
| JP S5711333 | A | 21-01-1982 | NONE | | |
| US 3455623 | A | 15-07-1969 | NONE | | |